# EUROPÄISCHE PATENTSCHRIFT

(11) **EP 3 473 984 B1**
(45) Veröffentlichungstag und Bekanntmachung des Hinweises auf die Patenterteilung: **13.10.2021**
(21) Anmeldenummer: 18201900.0
(22) Anmeldetag: 23.10.2018
(51) Int. Cl.: G01D 4/02, G01D 4/00

(54) **VORRICHTUNG ZUR ERFASSUNG VON MITTELS ZUMINDEST EINER VERBRAUCHSWERTERFASSUNGSEINHEIT ERMITTELTEN VERBRAUCHSWERTEN**
DEVICE FOR DETECTING CONSUMPTION VALUES DETERMINED BY AT LEAST ONE CONSUMPTION VALUE DETECTING UNIT
DISPOSITIF DE DÉTECTION DES VALEURS DE CONSOMMATION DÉTERMINÉES AU MOYEN D'AU MOINS UNE UNITÉ DE DÉTECTION DE CONSOMMATION

(30) Priorität: 23.10.2017 DE 102017124662
(43) Veröffentlichungstag der Anmeldung: 24.04.2019
(73) Patentinhaber: QUNDIS GmbH, 99098 Erfurt (DE)
(72) Erfinder: Boldizar, Matjaz, 2000 Maribor (SI); Kramberger, Iztok, 2000 Maribor (SI); Novak, Darko, 2000 Maribor (SI)
(74) Vertreter: Liedtke & Partner Patentanwälte

(56) Entgegenhaltungen:
- WO-A1-2016/025990
- AT-B- 409 677
- US-A- 5 897 607

## Beschreibung

Die Erfindung betrifft ein System, umfassend eine zentrale Recheneinheit und eine Vorrichtung zur Erfassung von mittels zumindest einer Verbrauchswerterfassungseinheit ermittelten Verbrauchswerten.

Aus dem Stand der Technik sind Vorrichtungen zum Erfassen von Verbrauchswerten in einem Gebäude anfallender Verbrauchsmengen bekannt. Dabei umfasst die Vorrichtung eine eingebettete Software, insbesondere eine Firmware, zum Betrieb der jeweiligen Vorrichtung. Insbesondere ist die Software hartkodiert, sodass bestimmte Vorrichtungen, insbesondere Ablesegeräte, zur Kopplung mit bestimmten Verbrauchswerterfassungseinheiten programmiert sind. Beispielsweise sind die Ablesegeräte zur Fern-Verbrauchsablesung ausgebildet.

Des Weiteren sind aus der WO 2016/025990 A1, der US 5,897,607 A1 und der AT 409 677 B1 Vorrichtungen zum Erfassen von Verbrauchswerten bekannt.

Der Erfindung liegt die Aufgabe zu Grunde, ein gegenüber dem Stand der Technik verbessertes System mit einer zentralen Recheneinheit und einer Vorrichtung zur Erfassung von Verbrauchswerten anzugeben.

Die Aufgabe wird erfindungsgemäß mit den Merkmalen des Anspruchs 1 gelöst.

Vorteilhafte Ausgestaltungen der Erfindung sind Gegenstand der Unteransprüche.

Ein System umfasst eine zentrale Recheneinheit und eine Vorrichtung zur Erfassung von mittels zumindest einer Verbrauchswerterfassungseinheit ermittelten Verbrauchswerten, wobei die Vorrichtung zumindest eine Datenerfassungseinheit zum Lesen der empfangenen Verbrauchswerte umfasst und mit einer Anzahl von Verbrauchswerterfassungseinheiten sowie mit der zentralen Recheneinheit gekoppelt ist. Die Datenerfassungseinheit umfasst zumindest eine Kommunikationsschnittstelle zur Kommunikation mit der zentralen Recheneinheit, insbesondere einer so genannten Cloud. Die zentrale Recheneinheit stellt eine Mehrzahl von Konfigurationsskripten bereit, mittels welchen die Datenerfassungseinheit zum Lesen von Verbrauchswerten unterschiedlicher Verbrauchswerterfassungseinheiten automatisch einstellbar ist, wobei die zentrale Recheneinheit in Abhängigkeit der abzulesenden Verbrauchswerterfassungseinheit hinterlegte Konfigurationsskripte an die Datenerfassungseinheit übermittelt. Dabei umfasst die Mehrzahl von Konfigurationsskripte jeweils vorgegebene Konfigurationsparameter zur automatischen Einstellung der Datenerfassungseinheit. Insbesondere erfolgt die Kommunikation zwischen der Datenerfassungseinheit und der zentralen Recheneinheit drahtlos. Des Weiteren ist die Vorrichtung zur Fernablesung der Verbrauchswertdaten vorgesehen. Insbesondere ist die Vorrichtung zur automatisierten Zählerfernauslesung ausgebildet. In einer Weiterbildung ist die Datenerfassungseinheit mit zumindest einer Empfangseinheit, welche zum Empfangen der Verbrauchswerte der Verbrauchswerterfassungseinheit ausgebildet ist, koppelbar.

Die Verbrauchswerterfassungseinheiten sind zum Beispiel in einem Gebäude, beispielsweise in einer oder mehreren Wohnungen des Gebäudes, installiert. Zum Beispiel sind die Verbrauchswerterfassungseinheiten Heizkostenverteiler, Wasserzähler, Wärmezähler, Gaszähler und/oder Stromzähler mit oder ohne Funkaufsatzmodulen auf diesen.

Beispielsweise sind die Vorrichtung und insbesondere die Datenerfassungseinheit zur Fernauslesung in einer Liegenschaft vorgesehen. Zum Beispiel ist die Empfangseinheit ein Netzwerkknoten, welcher Verbrauchswerte von einer Anzahl von Verbrauchswerterfassungseinheiten empfängt und innerhalb eines Netzwerks in der Liegenschaft verteilt. Somit stehen jederzeit die Verbrauchswerte für eine Fernübertragung bereit. Zum Beispiel ist die Datenerfassungseinheit der Vorrichtung mit solch einem Netzwerkknoten zur Übermittlung der Verbrauchswerte koppelbar.

Gemäß einer möglichen Ausgestaltung ist die Vorrichtung mit einem mobilen Gerät, insbesondere einem so genannten mobilen Datensammler, eines Ableseunternehmens oder Verbrauchers koppelbar. Beispielsweise umfassen die Vorrichtung und das mobile Gerät jeweils eine drahtlose Kommunikationsschnittstelle. Zum Beispiel sind die Vorrichtung und das mobile Gerät über eine Kommunikationsverbindung, wie beispielsweise eine Funkverbindung, miteinander koppelbar. Das mobile Gerät ist ausgebildet, um erfasste Verbrauchswertdaten der Vorrichtung anzufordern und zu empfangen. Bei einer aufgebauten Kommunikationsverbindung werden die ermittelten Verbrauchswertdaten der Vorrichtung von dieser ausgesendet und von dem mobilen Gerät bei Begehung eines Ablesegebiets, insbesondere eines Gebäudes, empfangen.

In einer Weiterbildung sind die empfangenen Verbrauchswertdaten auf dem mobilen Gerät hinterlegbar und/oder mittels des mobilen Geräts an eine zentrale Recheneinheit, insbesondere an einen zentralen Server, übertragbar.

In einer möglichen Ausführungsform ist das mobile Gerät des Ableseunternehmens oder Verbrauchers ein mobiles Telefon, ein Tablet, ein Verbrauchsdatenauslesegerät oder eine andere tragbare Verbrauchsdatenerfassungseinheit.

In einer Weiterbildung ist die Datenerfassungseinheit oder die Vorrichtung selbst als eine Ausleseeinheit bzw. ein Ablesegerät ausgebildet. Mit anderen Worten: Die Datenerfassungseinheit oder die Vorrichtung selbst ist als ein stationärer Datensammler ausgebildet. Zum Beispiel sind die mittels der als stationärer Datensammler ausgebildeten Datenerfassungseinheit oder Vorrichtung empfangenen Verbrauchswertdaten an das mobile Gerät, insbesondere den mobilen Datensammler, übermittelbar.

In einer Weiterbildung ist die Datenerfassungseinheit ein so genanntes Gateway. Übertragungsintervalle der Verbrauchswerte sind einstellbar. Die Kommunikationsschnittstelle ist beispielsweise zur drahtlosen Datenkommunikation, insbesondere Mobilfunk- und/oder Funkkommunikation, Intranet oder zur Kommunikation mittels Netzwerkprotokollen (TCP/IP, kurz für: Transmission Control Protocol/Internet Protocol) ausgebildet.

Die Konfigurationsparameter zum Lesen der Verbrauchswerte werden insbesondere in Skriptsprache verfasst und als Konfigurationsskript, insbesondere als Quelltext bzw. Quellcode, gespeichert und an die Datenerfassungseinheit übermittelt. Solch ein Konfigurationsskript kann in einfacher Weise von Entwicklern erstellt, getestet und anschließend dem Kunden freigegeben werden. Insbesondere können die Konfigurationsskripte jeweils voneinander unabhängig und jeweils unabhängig von der Firmware des Auslesegeräts geprüft werden, Dadurch kann insbesondere eine Datengröße der in der Datenerfassungseinheit integrierten Implementierung im Wesentlichen gering gehalten werden. Zudem ist eine Übertragungsgeschwindigkeit aufgrund der Übermittlung der Konfigurationsparameter in Skriptform weitestgehend schnell.

Mittels der automatischen Einstellung der Datenerfassungseinheit ist eine dynamische Änderung von Parametern einer in der Datenerfassungseinheit integrierten Implementierung jederzeit möglich. D. h., dass die Datenerfassungseinheit zum Lesen der Verbrauchswerte von unterschiedlichen Verbrauchswerterfassungseinheiten und/oder Netzwerkknoten eingestellt werden kann, ohne die in der Datenerfassungseinheit eingebettete Implementierung, Software oder Firmware vollständig ändern zu müssen. Insbesondere sind dadurch ein Zeitaufwand und Arbeitsaufwand zur Einstellung der Datenerfassungseinheit und Anpassung der Datenerfassungseinheit an unterschiedliche Verbrauchswerterfassungseinheiten verringert.

Des Weiteren kann eine Mehrzahl von verschiedenen Verbrauchswerterfassungseinheiten unterschiedlicher Hersteller und/oder unterschiedlicher Klassen, insbesondere Messgerätetypen, unterstützt werden. Insbesondere können unterschiedliche Standards und Normen, wie zum Beispiel in Bezug auf spezielle Kommunikationssysteme (M-Bus), Kommunikationsarchitekturen (OMS, DSMR) und/oder herstellerspezifische Attribute der jeweiligen Verbrauchswerterfassungseinheiten unterstützt werden. Die Datenerfassungseinheit, insbesondere die als Auslesegerät ausgebildete Datenerfassungseinheit, sollte nur Verbrauchswerterfassungseinheiten, insbesondere Messgeräte, unterstützen, die für spezielle Anwendungsfälle benötigt werden. In einer Weiterbildung ist die Datenerfassungseinheit als ein separates Teil ausgebildet, wobei die Konfigurationsparameter dynamisch einstellbar sind. Somit kann die Datenerfassungseinheit mit mehreren, bestimmten Verbrauchswerterfassungseinheiten zur Datenübertragung kommunizieren. Darüber hinaus ist die Datenerfassungseinheit an unterschiedliche, beispielsweise neu hinzugeführte Netzwerkknoten und/oder Verbrauchswerterfassungseinheiten anderer Hersteller oder mit anderen Betriebssystemen anpassbar.

In einer weiteren Ausführungsform der Vorrichtung umfassen die Konfigurationsskripte Synchronisationsparameter zur automatischen Einstellung, insbesondere Synchronisation, der Datenerfassungseinheit mit zumindest einer der Verbrauchswerterfassungseinheiten. Des Weiteren umfasst die zentrale Recheneinheit und/oder die Datenerfassungseinheit zumindest eine Datenbank, in welcher die Konfigurationsskripte zur automatischen Einstellung der Datenerfassungseinheit hinterlegbar sind. Insbesondere umfassen die Konfigurationsskripte jeweils Informationen zu unterschiedlichen Verbrauchswerterfassungseinheiten. Weiterhin umfasst die Datenbank insbesondere eine Anzahl von Zählerlisten.

Darüber hinaus sind in der Datenbank eine Anzahl von Attributen der jeweiligen Verbrauchswerterfassungseinheiten hinterlegt, wobei die Attribute zumindest Informationen zu einer der Verbrauchswerterfassungseinheit zugewiesenen Sequenznummer, einer der Verbrauchswerterfassungseinheit zugewiesenen Adresse, einer Identifikationsnummer der Verbrauchswerteinheit, einer Klasse der Verbrauchswerteinheit, einem der Verbrauchswerterfassungseinheit zugehörigen Kodierungsschlüssel und/oder anderen Attributen der jeweiligen Verbrauchswerterfassungseinheiten umfassen. Beispielsweise sind die Verbrauchswerterfassungseinheiten anhand von Identifikationsattributen und/oder Betriebsattributen zuordbar. Insbesondere können diese Informationen mittels der Datenerfassungseinheit abgefragt werden und den zugehörigen Attributen in der Datenbank zugeordnet werden. Sind die abgefragten Daten nicht zuordbar, wird diese Information an die zentrale Recheneinheit gesendet. D. h., dass beispielsweise ein Kommunikationsaufbau der Datenerfassungseinheit mit einer bestimmten Verbrauchswerterfassungseinheit fehlgeschlagen ist. Anschließend kann die Datenbank beispielsweise mit einer in der zentralen Recheneinheit hinterlegten und geeigneten Datenbank synchronisiert werden. Dabei werden Konfigurationsparameter zur Einstellung der Datenerfassungseinheit, insbesondere zur Synchronisation der Datenbank, übermittelt. Insbesondere sind die Attribute für die Datenerfassungseinheit zum Kommunikationsaufbau mit der jeweiligen Verbrauchswerterfassungseinheit vorgesehen.

Gemäß einer möglichen Weiterbildung der Vorrichtung ist die Datenerfassungseinheit mit zumindest einer Speichereinheit zur Hinterlegung der von der zentralen Recheneinheit übermittelten Konfigurationsparameter, welche insbesondere durch die Konfigurationsskripte vorgegeben sind, gekoppelt. Die Speichereinheit ist beispielsweise in der Datenerfassungseinheit integriert. Zum Beispiel sind bereits von der zentralen Recheneinheit übermittelte Konfigurationsskripte, insbesondere Konfigurationsparameter, in der Speichereinheit hinterlegbar. Somit sind die geeigneten Konfigurationsparameter und die Konfigurationsskripte jederzeit von Datenerfassungseinheit zur automatischen Einstellung eines Ableseprogramms abrufbar. Dadurch ist eine ständige Übermittlung von Konfigurationsparametern vermeidbar. D. h., dass keine Notwendigkeit besteht, die Konfigurationsskripte und Parameter bei jeder Verbindung zu aktualisieren. Weiterhin sind die Konfigurationsparameter bzw. Konfigurationsskripte jeweils mit einer Kennung versehen. Mittels der Kennung kann ein in der zentralen Recheneinheit implementiertes Anwendungsprogramm das jeweilige Konfigurationsskript oder die jeweiligen Konfigurationsparameter übermitteln und ausführen.

In einer weiteren möglichen Ausgestaltung der Vorrichtung ist die Datenerfassungseinheit mit zumindest einer Steuereinheit zum Ausführen der übermittelten Konfigurationsskripte und die durch diese vorgegebenen Konfigurationsparameter gekoppelt. Die Steuereinheit ist beispielsweise in der Datenerfassungseinheit integriert. Zum Beispiel ist die Steuereinheit eine Skript-Interpretiereinheit, insbesondere ein implementiertes Skript-Interpretierprogramm. Die Implementierung der von den Konfigurationsskripten vorgegebenen Konfigurationsparameter in die Datenerfassungseinheit muss nur dann durchgeführt werden, wenn beispielsweise eine Funktion für eine Serverkonnektivität, einen so genannten Scheduler, insbesondere in Form eines Steuerprogramms und/oder Zeitplanungsprogramms, ein Skript-Interpretierprogramm aktualisiert wird. Die Software oder Firmware der Datenverarbeitungseinheit kann unabhängig von der bereits betriebenen, implementierten Software oder Firmware der Vorrichtung zur Freigabe getestet werden.

Eine weitere Ausführungsform der Vorrichtung sieht vor, dass die Datenerfassungseinheit mit zumindest einer Verbrauchswertspeichereinheit zur Speicherung der abgelesenen Verbrauchswerte gekoppelt ist. Zum Beispiel ist die Verbrauchswertspeichereinheit in der Datenerfassungseinheit angeordnet. Eine weitere mögliche Ausgestaltung der Vorrichtung sieht vor, dass die Datenerfassungseinheit zur Übermittlung der hinterlegten abgelesenen Verbrauchswerte an die zentrale Recheneinheit mit dieser koppelbar ist. Dadurch sind die hinterlegten abgelesenen Verbrauchswertdaten zu anderen Zeitpunkten oder in vorgebbaren Zeitintervallen an die zentrale Recheneinheit zur Bearbeitung und Auswertung übermittelbar.

In einer möglichen Weiterbildung der Vorrichtung sind in der zentralen Recheneinheit eine Mehrzahl von unterschiedlichen Konfigurationsparameterdaten, insbesondere von Konfigurationsskripten, zum Kommunikationsaufbau mit bestimmten Verbrauchswerterfassungseinheiten und zur Bereitstellung für die Datenerfassungseinheit hinterlegbar. Insbesondere umfasst die zentrale Recheneinheit eine Sammlung der Konfigurationsparameter und/oder Konfigurationsskriptsammlung. Die zentrale Recheneinheit ist mit der Vorrichtung, insbesondere mit der Datenerfassungseinheit, in einem Kommunikationsnetz eingebunden. Insbesondere ist die zentrale Recheneinheit einer Plattform für intelligente Zähler zur digitalen Erfassung von Verbrauchsdaten zugeordnet. Weiterhin ist die zentrale Recheneinheit zur Verwaltung der Datenerfassungseinheit, insbesondere der als Gateway ausgebildeten Datenerfassungseinheit, vorgesehen. Darüber hinaus umfasst die zentrale Recheneinheit ein Anwendungsprogramm zur Vorgabe von zeitabhängigen Prozessabläufen der Datenerfassungseinheit. Beispielsweise umfassen die Prozessabläufe eine Reihenfolge der abzulesenden Verbrauchswerterfassungseinheiten und eine zeitliche Abfolge zur Ausführung von Konfigurationsparametern, insbesondere von Konfigurationsskripten. In einer Weiterbildung ist die zentrale Recheneinheit zur Verwaltung und Hinterlegung der Datenbanken, insbesondere der Zählerlisten, ausgebildet. Insbesondere erfolgen die Prozessabläufe innerhalb der als Gateway ausgebildeten Datenerfassungseinheit der Vorrichtung. Die als Gateway ausgebildete Datenerfassungseinheit umfasst Zählerlisten, zumindest ein Skript-Interpretierprogramm, eine Skriptspeichereinheit und eine Datenspeichereinheit, deren Informationen mit der als Cloud ausgebildeten zentralen Recheneinheit kommuniziert werden.

Gemäß einem weiteren Ausführungsbeispiel ist die zentrale Recheneinheit mit einer Entwicklungsumgebung gekoppelt. Alternativ oder zusätzlich kann die zentrale Recheneinheit eine integrierte Entwicklungsumgebung umfassen. Zum Beispiel ist die Entwicklungsumgebung eine Softwareentwicklungsumgebung und von zugehörigen Personen zugreifbar. Die Personen sind beispielsweise Entwickler, die in der Entwicklung der Konfigurationsparameter, insbesondere Konfigurationsskripte, für jeweilige Verbrauchswerterfassungseinheiten tätig sind. Beispielsweise werden die Konfigurationsparameter und Konfigurationsskripte in Form von Quellkodierungen und Bytekodierungen oder ähnlichem generiert und übermittelt.

Ausführungsbeispiele der Erfindung werden im Folgenden anhand von Zeichnungen näher erläutert.

Darin zeigen:
- Figur 1: eine schematische Darstellung eines Gebäudes mit einer Mehrzahl von Verbrauchswerterfassungseinheiten,
- Figur 2: eine schematische Darstellung von Verbrauchswerterfassungseinheiten und einer Vorrichtung zur Erfassung der Verbrauchswerte und
- Figur 3: ein schematisches Ausführungsbeispiel der Vorrichtung zur Erfassung der mittels der Verbrauchswerterfassungseinheit ermittelten Verbrauchswerte gemäß Figur 1.

Einander entsprechende Teile sind in allen Figuren mit den gleichen Bezugszeichen versehen.

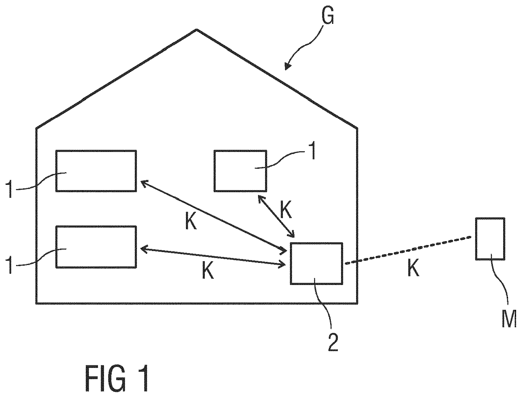

**Figur 1** zeigt ein Gebäude G mit einer Mehrzahl von Verbrauchswerterfassungseinheiten 1, die jeweils zur Ermittlung einer Verbrauchsmenge ausgebildet sind. Die Verbrauchswerterfassungseinheiten 1 sind mit einer Vorrichtung 2 datentechnisch gekoppelt, wobei die Vorrichtung 2 zur Erfassung von Verbrauchswerten anfallender Verbrauchsmengen ausgebildet ist.

Die Verbrauchswerterfassungseinheiten 1 sind beispielsweise in Wohnungen des Gebäudes G installiert und sind zum Beispiel Heizkostenverteiler, Wasserzähler, Wärmezähler, Gaszähler, Stromzähler und/oder Funkaufsatzmodule auf Zählern.

Zum Beispiel ist die Vorrichtung 2 als ein stationärer Datensammler ausgebildet. In einer Weiterbildung ist die Vorrichtung 2 mit einem mobilen Gerät M, insbesondere einem so genannten mobilen Datensammler und/oder einem mobilen Auslesegerät, eines Ableseunternehmens oder Verbrauchers koppelbar.

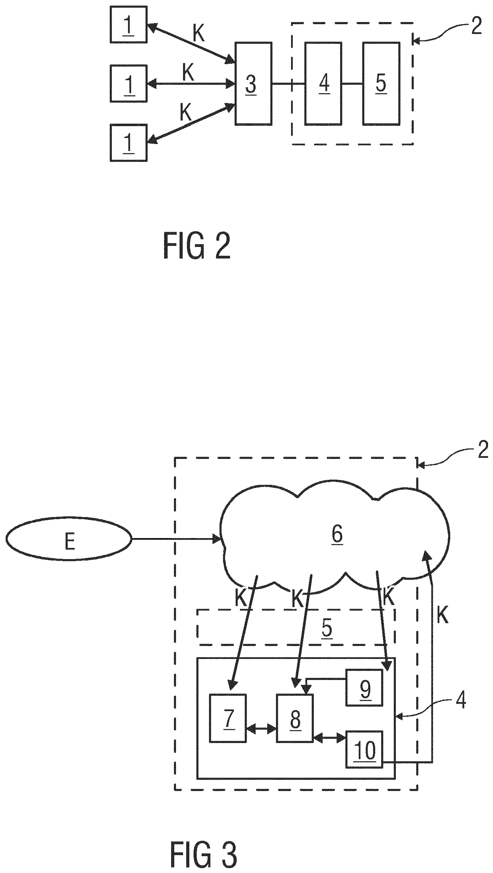

Das mobile Gerät M ist ausgebildet, um erfasste Verbrauchswertdaten von der Vorrichtung 2 anzufordern und zu empfangen. Bei einer aufgebauten, insbesondere drahtlosen, Kommunikationsverbindung K werden die von der Vorrichtung 2 ermittelten Verbrauchswertdaten ausgesendet und von dem mobilen Gerät M bei Begehung eines Ablesegebiets, insbesondere des Gebäudes G, empfangen. **Figur 2** zeigt eine schematische Darstellung von Verbrauchswerterfassungseinheiten 1 zur Ermittlung einer Verbrauchsmenge und der mit dieser gekoppelten Vorrichtung 2 zur Erfassung der Verbrauchswerte anfallender Verbrauchsmengen.

Beispielsweise sind die Verbrauchswerterfassungseinheiten 1 über eine Empfangseinheit 3 mit der Vorrichtung 2 zur Übermittlung der Verbrauchswertdaten gekoppelt. Zum Beispiel ist die Empfangseinheit 3 als Netzwerkknoten mit jeweils einem Sende- und Empfangsmodus ausgebildet. Weiterhin empfängt die Empfangseinheit 3 Verbrauchswertdaten der Verbrauchswerterfassungseinheiten 1 und verteilt diese in einer Liegenschaft. Dabei ist die Empfangseinheit 3 mit der Datenerfassungseinheit 4 gekoppelt. Hierfür ist die Datenerfassungseinheit 4 beispielsweise als ein so genanntes Gateway ausgebildet.

Alternativ ist die Vorrichtung 2 direkt mit den Verbrauchswerterfassungseinheiten 1 zur Übermittlung der Verbrauchswertdaten koppelbar. Die Vorrichtung 2 umfasst eine Datenerfassungseinheit 4 zum Lesen der empfangenen Verbrauchswerte. Die Datenerfassungseinheit 4 oder die Vorrichtung 2 selbst ist beispielsweise eine Ausleseeinheit.

Zum Lesen bzw. Senden der Verbrauchswerte ist eine Kommunikationsverbindung K zwischen den jeweiligen Verbrauchswerterfassungseinheiten 1 und der Vorrichtung 2 herstellbar. Hierfür umfasst die Vorrichtung 2 beispielsweise eine Kommunikationseinheit 5 zur Bereitstellung einer Kommunikationsschnittstelle. Beispielsweise ist die Vorrichtung 2 bidirektional kommunikationsfähig, d. h., dass die Vorrichtung 2 eine Kommunikationseinheit 5 für eine bidirektionale Datenkommunikation aufweist. Insbesondere ist eine drahtlose Datenkommunikation, wie zum Beispiel Funkkommunikation, herstellbar.

**Figur 3** zeigt ein schematisches Ausführungsbeispiel der Vorrichtung 2 zur Erfassung der mittels der Verbrauchswerterfassungseinheiten 1 ermittelten Verbrauchswerte.

Die Datenerfassungseinheit 4 der Vorrichtung 2 ist mit einer zentralen Recheneinheit 6 gekoppelt. Insbesondere sind die Datenerfassungseinheit 4 und die zentrale Recheneinheit 6 über die Kommunikationseinheit 5 miteinander koppelbar. Dabei erfolgt die Kommunikation, insbesondere die Datenkommunikation, drahtlos oder drahtgebunden und bidirektional. Beispielsweise ist die Kommunikationsverbindung K eine Funk-, Mobilfunk-, Intranet - und/oder Netzwerkprotokollverbindung. Die zentrale Recheneinheit 6 ist insbesondere eine so genannte Cloud. Zum Beispiel werden die Verbrauchswertdaten an die zentrale Recheneinheit 6 zur Auswertung übermittelt.

Die Datenerfassungseinheit 4 umfasst eine Datenbank 7 mit Informationen zu unterschiedlichen Verbrauchswerterfassungseinheiten 1. Insbesondere sind in der Datenbank 7 eine Anzahl von Attributen der jeweiligen Verbrauchswerterfassungseinheiten 1 hinterlegt. Die Attribute werden beispielsweise einer Sequenznummer der jeweiligen Verbrauchswerterfassungseinheiten 1, einer der jeweiligen Verbrauchswerterfassungseinheiten 1 zugewiesenen Adresse, einer Identifikationsnummer, einer Klasse (Klassifizierung) und/oder einem der jeweiligen Verbrauchswerterfassungseinheiten 1 zugehörigen Kodierungsschlüssel zugeordnet. Des Weiteren umfassen die Attribute Informationen zu anderen Attributen, insbesondere Identifikations- und Betriebsattributen, der jeweiligen Verbrauchswerterfassungseinheiten 1. Die Datenbank 7 dient zur Ermittlung der vorliegenden Verbrauchserfassungseinheiten 1 und zur Ermittlung eines geeigneten Prozessablaufs zur Verbrauchswerteerfassung und Ablesung dieser. Insbesondere ist aufgrund der in der Datenbank 7 hinterlegten Informationen eine Kommunikation zwischen der Datenerfassungseinheit 4 und der Verbrauchswerterfassungseinheiten 1 aufbaubar. Im vorliegenden Ausführungsbeispiel umfasst die Datenbank 7 zumindest eine Zählerliste, insbesondere eine Liste in Bezug auf die Verbrauchswerterfassungseinheiten 1.

Damit die Datenerfassungseinheit 4 nicht nur speziell für eine bestimmte Anzahl von Verbrauchswerterfassungseinheiten 1, beispielsweise von bestimmten Herstellern oder mit bestimmten Betriebssystemen, genutzt wird, ist die Datenerfassungseinheit 4 zum Lesen von Verbrauchswerten unterschiedlicher Verbrauchswerterfassungseinheiten 1 automatisch einstellbar. Dadurch ist die Datenerfassungseinheit 4 und die Vorrichtung 2 selbst nicht auf die Anzahl der vorgegebenen Verbrauchswerterfassungseinheiten 1 begrenzt.

Es wird eine unkomplizierte und zeitsparende Ausgestaltung der Vorrichtung 2 vorgeschlagen, wobei mittels der zentralen Recheneinheit 6 die Datenbank 7 der Datenerfassungseinheit 4 jeweils an verschiedene Verbrauchswerterfassungseinheiten 1 zum passenden Kommunikationsaufbau angepasst wird. Über die zentrale Recheneinheit 6 sind insbesondere Konfigurationsparameter zur automatischen Einstellung der Datenerfassungseinheit 4 übermittelbar. Dadurch sind der Datenerfassungseinheit 4 unterschiedliche Ermittlungs- und Auslesungsabläufe für jeweils unterschiedliche Verbrauchswerterfassungseinheiten 1 ermöglicht. Insbesondere werden die Konfigurationsparameter in Form von Konfigurationsskripten KS bereitgestellt. Somit können verschiedene Verbrauchswerterfassungseinheiten 1 unterschiedlicher Hersteller und unterschiedlicher Klassen, insbesondere Messgerätetypen, unterstützt werden. Insbesondere können unterschiedliche Standards und Normen, wie zum Beispiel in Bezug auf spezielle Kommunikationssysteme (M-Bus), Kommunikationsarchitekturen (OMS, DSMR) und/oder herstellerspezifische Attribute der jeweiligen Verbrauchswerterfassungseinheiten 1 mittels der Datenerfassungseinheit 4 unterstützt werden.

Zur Ausführung der übermittelten Konfigurationsparameter, insbesondere Konfigurationsskripte KS, umfasst die Vorrichtung 2 eine Steuereinheit 8. Die Steuereinheit 8 ist mit der Datenerfassungseinheit 4 gekoppelt. Weiterhin ist die Steuereinheit 8 mit der Datenbank 7 zur Einstellung, insbesondere Synchronisation dieser, nach Ausführung der mittels zumindest eines Konfigurationsskripts KS vorgegebenen Konfigurationsparameter gekoppelt. Zum Beispiel ist die Steuereinheit 8 ein Skriptinterpretierprogramm.

Des Weiteren umfasst die Vorrichtung 2 eine Speichereinheit 9 zur Hinterlegung der Konfigurationsskripte KS, umfassend die Konfigurationsparameter, die von der zentralen Recheneinheit 6 übermittelt werden. Im dargestellten Ausführungsbeispiel ist die Speichereinheit 9 in der Datenerfassungseinheit 4 integriert. Zudem ist die Speichereinheit 9 mit der Steuereinheit 8 gekoppelt. Dadurch sind hinterlegte Konfigurationsparameter, insbesondere Konfigurationsskripte KS, jederzeit oder innerhalb bestimmter Zeitintervalle von der Steuereinheit 8 zur Ausführung dieser abrufbar. Hierfür sind die Konfigurationsparameter bzw. Konfigurationsskripte KS jeweils mit einer Kennung versehen. Mittels der Kennung kann ein in der zentralen Recheneinheit 6 implementiertes Anwendungsprogramm das jeweilige Konfigurationsskript KS oder die jeweiligen Konfigurationsparameter ausführen.

Im dargestellten Ausführungsbeispiel umfasst die Vorrichtung 2 weiterhin eine Verbrauchswertspeichereinheit 10 zur Speicherung der bereits abgelesenen Verbrauchswerte. Dabei kann die Verbrauchswertspeichereinheit 10 in der Datenerfassungseinheit 4 integriert sein. Insbesondere ist die Verbrauchswertspeichereinheit 10 mit der Steuereinheit 8 gekoppelt. Die hinterlegten Verbrauchswertdaten sind jederzeit oder zu bestimmten Zeitintervallen von der zentralen Recheneinheit 6 abrufbar.

Zur Entwicklung der Konfigurationsparameter und Konfigurationsskripte KS in Abhängigkeit unterschiedlicher Verbrauchswerterfassungseinheiten 1 ist die zentrale Recheneinheit 6 mit einer Entwicklungsumgebung E koppelbar. Die Entwicklungsumgebung E ist zur Entwicklung, insbesondere Generierung und Prüfung und anschließender Freigabe der Konfigurationsparameter und Konfigurationsskripte KS vorgesehen. Dabei können Entwickler an diesen Parametern und Skripten unabhängig einer Software oder Firmware der Datenerfassungseinheit 4 arbeiten.

Die Konfigurationsparameter und die Konfigurationsskripte KS werden insbesondere in Skriptsprache generiert. Beispielsweise ist die Skriptsprache, welche in der Steuereinheit 8 implementiert ist, vorgesehen, um eine Bytekodierung zu kompilieren. Insbesondere sind dadurch eine Datengröße und Datengeschwindigkeit optimiert. Weiterhin ist die Skriptsprache zur Unterstützung arithmetischer und logischer Operationen und zur Unterstützung von Grundschleifen und bedingten Aussagen ausgebildet. Zudem ist die Skriptsprache zur Unterstützung verschiedener Variablentypen, wie zum Beispiel Integer, Byte, Arrays, ausgebildet. Darüber hinaus umfasst die Skriptsprache eine Speicheroperation, wie zum Beispiel einen Kopierpuffer. In einer Weiterbildung ist die Skriptsprache zur Unterstützung von Verschlüsselungsprimitiven (AES, DES) mit verschiedenen Betriebsarten ausgebildet. In einem weiteren Ausführungsbeispiel sind mittels der Skriptsprache Telegramme drahtlos oder drahtgebunden (M-Bus, wM-Bus) empfangbar und übertragbar. Über die Skriptsprache ist außerdem ein Betriebsmodus der Datenerfassungseinheit 4 bestimmbar, wie zum Beispiel zwischen drahtgebundenen oder drahtlosen Bussystemen (M-Bus, wM-Bus). Über die Skriptsprache ist weiterhin ein Zugriff auf die Datenbank 7, insbesondere Zählerliste, und auf die Datenspeicherung möglich. Des Weiteren können mittels der Skriptsprache unterschiedliche Bereitschaftszustände, beispielsweise der Datenerfassungseinheit 4, programmiert werden.

Im Nachfolgenden ist ein Ablauf zur automatischen Einstellung der Datenerfassungseinheit 4, insbesondere der mittels eines Konfigurationsskripts KS vorgegebenen Konfigurationsparameter, beschrieben.

Wird ein neues Konfigurationsskript KS in der Entwicklungsumgebung E erstellt, wird es vorerst unabhängig der Software oder Firmware der Datenerfassungseinheit 4 auf Anwendbarkeit geprüft. Anschließend wird das Konfigurationsskript KS über die zentrale Recheneinheit 6 an die Datenerfassungseinheit 4 übermittelt und für diese aktiviert. Dabei kann das Konfigurationsskript KS in der lokalen Speichereinheit 9 der Datenerfassungseinheit 4 hinterlegt werden. Zudem wird die Datenbank 7 der Datenerfassungseinheit 4 mit der in der zentralen Recheneinheit 6 bereitgestellten Datenbank, insbesondere Zählerliste, synchronisiert. Die zentrale Recheneinheit 6 übermittelt die Aufgabe, das aktivierte Konfigurationsskript KS mittels der Steuereinheit 8 auszuführen. Dadurch kann die Datenerfassungseinheit 4 eine Kommunikation mit einer durch das Konfigurationsskript KS vorgegebenen Verbrauchswerterfassungseinheit 1 aufbauen und Daten, insbesondere Verbrauchswertdaten, übertragen. Die erfassten Verbrauchswertdaten werden beispielsweise temporär in der Verbrauchswertspeichereinheit 10 hinterlegt. Nach Beenden des Konfigurationsskripts KS, d. h., wenn beispielsweise ein Scanvorgang der Verbrauchswerterfassungseinheit 1 und/oder eine Kommunikation mit dieser durchgeführt wurde/n, werden die ermittelten Ergebnisse an die zentrale Recheneinheit 6 übermittelt.

### BEZUGSZEICHENLISTE

- 1: Verbrauchswerterfassungseinheit
- 2: Vorrichtung
- 3: Empfangseinheit
- 4: Datenerfassungseinheit
- 5: Kommunikationseinheit
- 6: Zentrale Recheneinheit
- 7: Datenbank
- 8: Steuereinheit
- 9: Speichereinheit
- 10: Verbrauchswertspeichereinheit

- E: Entwicklungsumgebung
- G: Gebäude
- K: Kommunikationsverbindung
- KS: Konfigurationsskript
- M: mobiles Gerät

## Patentansprüche

1. System, umfassend eine zentrale Recheneinheit (6) und eine Vorrichtung (2) zur Erfassung von mittels zumindest einer Verbrauchswerterfassungseinheit (1) ermittelten Verbrauchswerten,
wobei die Vorrichtung (2) mit einer Anzahl von Verbrauchswerterfassungseinheiten (1) koppelbar ist und zumindest eine Datenerfassungseinheit (4) zum Lesen, insbesondere Empfangen, der Verbrauchswerte umfasst,
wobei:
- die Datenerfassungseinheit (4) mit der zentralen Recheneinheit (6) gekoppelt ist,
- die Datenerfassungseinheit (4) zumindest eine Kommunikationsschnittstelle zur Kommunikation mit der zentralen Recheneinheit (6) umfasst,
- die zentrale Recheneinheit (6) eine Mehrzahl von Konfigurationsskripten (KS) bereitstellt, mittels welchen die Datenerfassungseinheit (4) zum Lesen von Verbrauchswerten unterschiedlicher Verbrauchswerterfassungseinheiten (1) automatisch einstellbar ist,
- die zentrale Recheneinheit (6) in Abhängigkeit der abzulesenden Verbrauchswerterfassungseinheit (1) hinterlegte Konfigurationsskripte (KS) an die Datenerfassungseinheit (4) übermittelt, und
- die Mehrzahl von Konfigurationsskripten (KS) jeweils vorgegebene Konfigurationsparameter zur automatischen Einstellung der Datenerfassungseinheit (4) umfasst.

2. System nach Anspruch 1, wobei mittels der automatischen Einstellung der Datenerfassungseinheit (4) eine dynamische Änderung der Konfigurationsparameter einer in der Datenerfassungseinheit (4) integrierten Implementierung jederzeit ausführbar ist.

3. System nach Anspruch 1 oder 2, wobei die Datenerfassungseinheit (4) an unterschiedliche Netzwerkknoten und/oder Verbrauchswerterfassungseinheiten (1) anderer Hersteller oder mit anderen Betriebssystemen anpassbar ist.

4. System nach einem der vorhergehenden Ansprüche,
wobei die Konfigurationsskripte (KS) jeweils vorgegebene Synchronisationsparameter zur automatischen Synchronisation mit zumindest einer der Verbrauchswerterfassungseinheiten (1) umfassen.

5. System nach einem der vorhergehenden Ansprüche,
wobei die zentrale Recheneinheit (6) und/oder die Datenerfassungseinheit (4) eine Datenbank (7) umfasst, in welcher die Konfigurationsskripte (KS) zur automatischen Synchronisation der Datenerfassungseinheit (4) mit der jeweiligen Verbrauchswerterfassungseinheit (1) hinterlegt sind.

6. System nach Anspruch 5,
wobei in der Datenbank (7) eine Anzahl von Attributen der jeweiligen Verbrauchswerterfassungseinheiten (1) hinterlegt sind, wobei die Attribute zumindest Informationen zu
- einer der Verbrauchswerterfassungseinheit (1) zugewiesenen Sequenznummer,
- einer der Verbrauchswerterfassungseinheit (1) zugewiesenen Adresse,
- einer Identifikationsnummer der Verbrauchswerterfassungseinheit (1),
- einer Klasse der Verbrauchswerterfassungseinheit (1),
- einem der Verbrauchswerterfassungseinheit (1) zugehörigen Kodierungsschlüssel und/oder
- anderen Identifikations- und/oder Betriebsattributen der jeweiligen Verbrauchswerterfassungseinheiten (1) umfassen.

7. System nach einem der vorhergehenden Ansprüche,
wobei die Datenerfassungseinheit (4) zumindest eine Speichereinheit (9) zur Hinterlegung von übermittelten Konfigurationsskripten (KS) umfasst.

8. System nach einem der vorhergehenden Ansprüche,
wobei die Datenerfassungseinheit (4) zumindest eine Steuereinheit (8) zum Ausführen der übermittelten Konfigurationsskripte (KS) umfasst.

9. System nach einem der vorhergehenden Ansprüche,
wobei die Datenerfassungseinheit (4) zumindest eine Verbrauchswertspeichereinheit (10) zur Speicherung der abgelesenen Verbrauchswerte umfasst.

10. System nach Anspruch 9,
wobei die gespeicherten und abgelesenen Verbrauchswerte von der Datenerfassungseinheit (4) an die zentrale Recheneinheit (6) übermittelbar sind.

11. System nach einem der vorhergehenden Ansprüche,
wobei die zentrale Recheneinheit (6) mit einer Entwicklungsumgebung (E) gekoppelt ist.

12. System nach einem der vorhergehenden Ansprüche,
wobei die Verbrauchswerteinheiten (1) über zumindest eine Empfangseinheit (3) mit der Vorrichtung (2) gekoppelt sind, wobei die Datenerfassungseinheit (4) mit der zumindest einen Empfangseinheit (3), welche zum Empfangen der Verbrauchswerte der Verbrauchswerterfassungseinheiten (1) ausgebildet ist, koppelbar ist.

13. System nach einem der vorhergehenden Ansprüche,
wobei die Datenerfassungseinheit (4) ein Gateway ist.

## Claims

1. System, comprising a central computing unit (6) and an apparatus (2) for recording consumption values ascertained by means of at least one consumption value recording unit (1),
wherein the apparatus (2) is couplable to a number of consumption value recording units (1) and comprises at least one data capture unit (4) for reading, in particular receiving, the consumption values,
wherein:
- the data capture unit (4) is coupled to the central computing unit (6),
- the data capture unit (4) comprises at least one communication interface for communicating with the central computing unit (6),
- the central computing unit (6) provides a plurality of configuration scripts (KS) by means of which the data capture unit (4) is automatically adjustable for reading consumption values of different consumption value recording units (1),
- the central computing unit (6) transmits stored configuration scripts (KS) to the data capture unit (4) on the basis of the consumption value recording unit (1) that is to be read, and
- the plurality of configuration scripts (KS) each comprise predefined configuration parameters for automatically adjusting the data capture unit (4).

2. System according to Claim 1, wherein a dynamic change of the configuration parameters of an implementation integrated in the data capture unit (4) is performable at any time by means of the automatic adjustment of the data capture unit (4).

3. System according to Claim 1 or 2, wherein the data capture unit (4) is adaptable for different network nodes and/or consumption value recording units (1) from different manufacturers or with different operating systems.

4. System according to one of the preceding claims,
wherein the configuration scripts (KS) each comprise predefined synchronization parameters for automatic synchronization with at least one of the consumption value recording units (1).

5. System according to one of the preceding claims,
wherein the central computing unit (6) and/or the data capture unit (4) comprises a database (7) that stores the configuration scripts (KS) for automatically synchronizing the data capture unit (4) with the respective consumption value recording unit (1).

6. System according to Claim 5,
wherein the database (7) stores a number of attributes of the respective consumption value recording units (1), the attributes at least comprising information regarding
- a sequence number allocated to the consumption value recording unit (1),
- an address allocated to the consumption value recording unit (1),
- an identification number of the consumption value recording unit (1),
- a class of the consumption value recording unit (1),
- a coding key associated with the consumption value recording unit (1) and/or
- other identification and/or operating attributes of the respective consumption value recording units (1).

7. System according to one of the preceding claims,
wherein the data capture unit (4) comprises at least one memory unit (9) for storing transmitted configuration scripts (KS).

8. System according to one of the preceding claims,
wherein the data capture unit (4) comprises at least one control unit (8) for executing the transmitted configuration scripts (KS).

9. System according to one of the preceding claims,
wherein the data capture unit (4) comprises at least one consumption value memory unit (10) for storing the consumption values read.

10. System according to Claim 9,
wherein the stored consumption values read are transmittable from the data capture unit (4) to the central computing unit (6).

11. System according to one of the preceding claims,
wherein the central computing unit (6) is coupled to a development environment (E).

12. System according to one of the preceding claims,
wherein the consumption value units (1) are coupled to the apparatus (2) via at least one receiving unit (3), the data capture unit (4) being couplable to the at least one receiving unit (3), which is designed to receive the consumption values of the consumption value recording units (1).

13. System according to one of the preceding claims,
wherein the data capture unit (4) is a gateway.

## Revendications

1. Système, comprenant une unité de calcul centrale (6) et un dispositif (2) permettant de détecter des valeurs de consommation déterminées au moyen d'au moins une unité de détection de valeurs de consommation (1),
le dispositif (2) pouvant être couplé avec un nombre d'unités de détection de valeurs de consommation (1) et comprenant au moins une unité de détection de données (4) pour lire, en particulier recevoir, les valeurs de consommation, dans lequel :
- l'unité de détection de données (4) est couplée avec l'unité de calcul centrale (6),
- l'unité de détection de données (4) comprend au moins une interface de communication pour la communication avec l'unité de calcul centrale (6),
- l'unité de calcul centrale (6) fournit une pluralité de scripts de configuration (KS) au moyen desquels l'unité de détection de données (4) peut être réglée automatiquement pour lire des valeurs de consommation de différentes unités de détection de valeurs de consommation (1),
- l'unité de calcul centrale (6) transmet à l'unité de détection de données (4) des scripts de configuration (KS) enregistrés en fonction de l'unité de détection de valeurs de consommation (1) à lire, et
- la pluralité de scripts de configuration (KS) comprend respectivement des paramètres de configuration prédéfinis pour le réglage automatique de l'unité de détection de données (4).

2. Système selon la revendication 1, dans lequel le réglage automatique de l'unité de détection de données (4) permet de réaliser à tout moment une modification dynamique des paramètres de configuration d'une mise en œuvre intégrée dans l'unité de détection de données (4).

3. Système selon la revendication 1 ou 2, dans lequel l'unité de détection de données (4) peut être adaptée à différents nœuds de réseau et/ou à différentes unités de détection de valeurs de consommation (1) d'autres fabricants ou munis d'autres systèmes d'exploitation.

4. Système selon l'une quelconque des revendications précédentes, dans lequel les scripts de configuration (KS) comprennent des paramètres de synchronisation respectivement prédéfinis pour la synchronisation automatique avec au moins l'une des unités de détection de valeurs de consommation (1).

5. Système selon l'une quelconque des revendications précédentes, dans lequel l'unité de calcul centrale (6) et/ou l'unité de détection de données (4) comprend/comprennent une base de données (7) dans laquelle sont enregistrés les scripts de configuration (KS) pour la synchronisation automatique de l'unité de détection de données (4) avec l'unité de détection de valeurs de consommation (1).

6. Système selon la revendication 5, dans lequel dans la base de données (7), un nombre d'attributs des unités de détection de valeurs de consommation (1) respectives est enregistré, les attributs comprenant au moins des informations concernant
- un numéro de séquence attribué à l'unité de détection de valeurs de consommation (1),
- une adresse attribuée à l'unité de détection de valeurs de consommation (1),
- un numéro d'identification de l'unité de détection de valeurs de consommation (1),
- une classe de l'unité de détection de valeurs de consommation (1),
- une clé de codage associée à l'unité de détection de valeurs de consommation (1), et/ou
- d'autres attributs d'identification et/ou de fonctionnement des unités de détection de valeurs de consommation (1) respectives.

7. Système selon l'une quelconque des revendications précédentes, dans lequel l'unité de détection de données (4) comprend au moins une unité de mémoire (9) pour enregistrer des scripts de configuration (KS) transmis.

8. Système selon l'une quelconque des revendications précédentes, dans lequel l'unité de détection de données (4) comprend au moins une unité de commande (8) pour exécuter les scripts de configuration (KS) transmis.

9. Système selon l'une quelconque des revendications précédentes, dans lequel l'unité de détection de données (4) comprend au moins une unité de mémoire de valeurs de consommation (10) pour mémoriser les valeurs de consommation lues.

10. Système selon la revendication 9, dans lequel les valeurs de consommation mémorisées et lues peuvent être transmises de l'unité de détection de données (4) à l'unité de calcul centrale (6).

11. Système selon l'une quelconque des revendications précédentes, dans lequel l'unité de calcul centrale (6) est couplée avec un environnement de développement (E).

12. Système selon l'une quelconque des revendications précédentes, dans lequel les unités de valeurs de consommation (1) sont couplées avec le dispositif (2) par au moins une unité de réception (3), l'unité de détection de données (4) pouvant être couplée avec ladite au moins une unité de réception (3) qui est réalisée pour recevoir les valeurs de consommation des unités de détection de valeurs de consommation (1).

13. Système selon l'une quelconque des revendications précédentes, dans lequel l'unité de détection de données (4) est une passerelle.
